# EUROPÄISCHE PATENTANMELDUNG

(11) **EP 1 120 045 A1**
(43) Veröffentlichungstag der Anmeldung: **01.08.2001**
(21) Anmeldenummer: 00101725.0
(22) Anmeldetag: 26.01.2000
(51) Int. Cl.: A23G 7/00, A23G 9/28, B65D 57/00, B65D 85/78, A23G 9/02

(54) **Verfahren und Anlage zum Stapeln von mit Schutzhüllen versehenen Waffeltüten**

(71) Anmelder: G.A.M Gesellschaft für Anlagen- Maschinenbau und Service mbH, 45481 Mülheim an der Ruhr (DE)
(72) Erfinder:
(74) Vertreter: Nunnenkamp, Jörg, Dr.

(57) **Zusammenfassung**

Es handelt sich um ein Verfahren und eine Anlage zur Herstellung gebrauchsfertiger Waffeltüten (3) aus Waffelformteilen (1). Dabei wird zunächst das jeweilige Waffelformteil (1) einzeln einer Transportvorrichtung (4) zugeführt und hier im Wesentlichen linear fortbewegt. Im Zuge dieser Bewegung wird das Waffelformteil (1) mit einer in Richtung der Fortbewegung davor befindlichen Schutzhülle (2) zu der gebrauchsfertigen Waffeltüte (3) vereinigt.

## Beschreibung

Die Erfindung betrifft ein Verfahren zur Herstellung gebrauchsfertiger Waffeltüten aus Waffelformteilen.

Die Waffelformteile werden in der Regel aus einem Teig produziert, welcher üblicherweise gepresst gebacken wird. Dies geschieht größtenteils in einer geschlossenen Backform (vgl. EP 0 484 670 A1). Bei diesen Waffelformteilen handelt es sich hauptsächlich um sogenannte Waffelbecher, die zur Aufnahme von Speiseeis geeignet sind.

Derartige Waffelformteile können hygienische Probleme bereiten, weil Sie durchweg essbar gestaltet sind. So lassen sich Verschmutzungen bei der Handhabung und Eisabfüllung nicht zuverlässig ausschließen. Auch können gegebenenfalls Krankheitserreger durch eine Bedienperson übertragen werden. Zu diesem Zweck hat man in der Vergangenheit bereits versucht, Schutzmaßnahmen in Form von per Hand aufgesteckten Ringen, herumgewickelten Servietten usw. vorzusehen. Derartiges ist vom Zeitaufwand her nicht akzeptabel. Auch ist die Handhabung äußerst schwierig, weil zwei voneinander unabhängige Teile (Waffelformteil und Schutzhülle) separat ergriffen und zu der dann gebrauchsfertigen Waffeltüte vereinigt werden müssen. Hier will die Erfindung insgesamt Abhilfe schaffen.

Der Erfindung liegt das technische Problem zugrunde, ein Verfahren zur Herstellung gebrauchsfertiger Waffeltüten aus Waffelformteilen anzugeben, welches eine automatische Produktion derartiger Waffeltüten gewährleistet, so dass die beschriebenen hygienischen Probleme zuverlässig ausgeschlossen werden können.

Zur Lösung dieser Aufgabe ist Gegenstand der Erfindung ein Verfahren zur Herstellung gebrauchsfertiger Waffeltüten aus Waffelformteilen mit folgenden Verfahrensschritten:
**1.1)** das jeweilige Waffelformteil wird einzeln einer Transportvorrichtung zugeführt und im Wesentlichen linear fortbewegt;
**1.2)** im Zuge dieser Bewegung wird das Waffelformteil mit einer in Richtung der Fortbewegung davor befindlichen Schutzhülle zu der gebrauchsfertigen Waffeltüte vereinigt.

Dabei kann die Herstellung des Waffelformteils an sich vorgeschaltet sein und nach üblichen Verfahren erfolgen (vgl. beispielsweise die EP 0 484 670 A1). In diesem Fall werden die solchermaßen produzierten Waffelformteile unmittelbar der angesprochenen Transportvorrichtung zugeführt. Es ist aber auch denkbar, dass das zur Herstellung der Waffelformteile obligatorische Waffelbacken in einem zeitlich und räumlich völlig getrennten Backschritt vorgenommen wird. - So oder so bilden in der Regel mehrere Waffelformteile zur besseren Handhabung einen Stapel. Das heißt, die mehreren Waffelformteile werden der Transportvorrichtung größtenteils gestapelt zugeführt.

Dann ist es natürlich erforderlich, diesen Stapel an Waffelformteilen eingangsseitig der Transportvorrichtung zu entstapeln und zu vereinzeln. Dies wird im Detail mit Bezug auf die Figurenbeschreibung noch näher erläutert werden. Der Transport der Waffelformteile auf bzw. in der Transportvorrichtung erfolgt üblicherweise mittels Mitnehmern. Diese können oberhalb einer Förderrinne angeordnet sein, durch welche die Waffelformteile schiebend oder ziehend transportiert werden. Selbstverständlich sind auch andere Vorgehensweisen beim Transport denkbar.

Damit die Schutzhülle mit dem Waffelformteil vereinigt werden kann, wird diese zunächst mit Hilfe einer Greif-/Schwenkeinheit vor dem zugehörigen Waffelformteil in der Förderrinne oder auf der Transportvorrichtung abgelegt. Für den Weitertransport der Schutzhülle sorgt nun ein eigener Mitnehmer. Der Abstand zwischen Waffelformteil und Schutzhülle innerhalb der Förderrinne bemisst sich dabei nach der Beabstandung der Mitnehmer untereinander.

Um einen möglichst innigen Verbund zwischen Schutzhülle und Waffelformteil zu erreichen, ist weiter vorgesehen, dass das Waffelformteil vor seiner Vereinigung mit der Schutzhülle adhäsiv beschichtet wird. Hierzu dient in der Regel eine Klebestation, welche als Klebstoff üblicherweise Zuckerguss oder ein anderes essbares Adhäsivmittel auf das Waffelformteil aufbringt. Dies kann punktuell oder flächig geschehen. Üblicherweise reicht bereits eine punktförmige Adhäsivverbindung zwischen Waffelformteil und Schutzhülle, weil die beiden vorgenannten Elemente von ihren Abmessungen her ohnehin aneinander angepasst sind.

So ist das Waffelformteil in der Regel als Waffelbecher oder Waffeltüte mit oder ohne Boden ausgeführt. Es hat eine größtenteils konische Form, an welche auch die Schutzhülle angepasst ist. Denn hierbei handelt es sich hauptsächlich um einen Papierring mit in etwa gleicher Konizität.

Zur Vereinigung der Schutzhülle mit dem Waffelformteil ist schließlich vorgesehen, dass die sich auf oder in der Transportvorrichtung fortbewegende Schutzhülle angehalten wird. Auf diese Weise kann das unverändert weitertransportierte Waffelformteil in die Schutzhülle eingeschoben werden, so dass eine gebrauchsfertige Waffeltüte, das heißt eine Waffeltüte mit hiermit verbundener Schutzhülle, die Transportvorrichtung verlässt.

Gegenstand der Erfindung ist auch eine Anlage, welche sich zur Herstellung gebrauchsfertiger Waffeltüten aus Waffelformteilen besonders eignet. Diese Anlage wird im Patentanspruch 7 beschrieben. Vorteilhafte Ausgestaltungen sind Gegenstand der Ansprüche 8-11.

Immer wird im Rahmen der Erfindung eine vollautomatische Vereinigung zwischen Schutzhülle bzw. Schutzring oder Papierring und Waffelformteil erreicht, ohne dass manuelle Verrichtungen vorgenommen werden müssen. Dabei ist die Verbindung zwischen Waffelformteil und Schutzhülle gleichsam nur temporär, kann also problemlos gelöst werden. Mit anderen Worten wird ein Verzehr des Waffelformteiles nicht behindert.

Immer ist gewährleistet, dass beispielsweise ein (Soft-)Eisverkäufer nicht mit dem Waffelformteil als solchen beim Eisabfüllen in Berührung kommt. Vielmehr sorgt die Schutzhülle dafür, dass der Eisverkauf unter bisher nicht für möglich gehaltenen Hygienegesichtspunkten zukünftig verlaufen kann. Tatsächlich ergreift der Eisverkäufer nämlich einzig die Schutzhülle, kommt also mit dem essbaren Waffelformteil nicht (mehr) in Berührung.

Gleiches gilt für einen etwaigen Transport der solchermaßen hergestellten gebrauchsfertigen Waffeltüten. Denn diese werden in der Regel als Stapel konfektioniert, welcher außenseitig die jeweils aneinander angrenzenden bzw. sich überlappenden Schutzhüllen aufweist. Verschmutzungen können hierdurch zuverlässig ausgeschlossen werden.

Außerdem sorgt die in der Regel als Papierring ausgeführte Schutzhülle für eine zusätzliche Stabilisierung des Waffelformteiles, so dass auch das ansonsten lästige Schmelzen oder Brechen des Waffelformteiles beim Verlaufen des Speiseeises nicht (mehr) so gravierende Folgen nach sich zieht. Der Verzehr wird also deutlich erleichtert. Einschränkungen sind nur insofern hinzunehmen, als der Genuss des Waffelformteiles ein Entfernen der Schutzhülle erfordert. Dies gelingt problemlos und zudem umweltverträglich, weil es sich bei den in der Regel eingesetzten Papierringen um einen recycelfähigen Werkstoff handelt. Hierin sind die wesentlichen Vorteile der Erfindung zu sehen.

Im folgenden wird die Erfindung anhand einer lediglich ein Ausführungsbeispiel darstellenden Zeichnung näher erläutert; es zeigen:
- **Fig. 1**: eine erfindungsgemäße Anlage zur Herstellung gebrauchsfertiger Waffeltüten aus Waffelformteilen in Seitenansicht;
- **Fig. 2**: den Gegenstand nach Fig. 1 in perspektivischer Ansicht, und zwar die Konfektioniereinheit in Frontansicht,
- **Fig. 3**: den Gegenstand nach Fig. 1 und zwar das Ende der Transportvorrichtung in perspektivischer Ansicht,
- **Fig. 4**: einen Querschnitt durch Fig. 1 entlang der Linie A-A im Bereich einer Entstapelungseinheit,
- **Fig. 5**: ein Detail der Konfektioniereinheit für die Zuführung der Schutzhüllen,
- **Fig. 6a u. 6b**: die Konfektioniereinheit in Einzelansicht und
- **Fig. 7**: ein Detailausschnitt aus Fig. 1 im Bereich einer Fügestation.

In den Figuren ist eine Anlage zur Herstellung gebrauchsfertiger Waffeltüten 3 dargestellt. Unter gebrauchsfertigen Waffeltüten 3 werden im Rahmen der Erfindung Waffelformteile 1 verstanden, welche mit Schutzhüllen 2 ausgerüstet sind. Bei den Waffelformteilen 1 handelt es sich nach dem Ausführungsbeispiel um Waffelbecher zur Aufnahme von Speiseeis. Die Schutzhüllen 2 sind als konische Papierringe 2 ausgebildet. Die in den Figuren dargestellte Anlage dient nun dazu, die Waffelformteile 1 mit den Schutzhüllen 2 zu den endseitig zu erkennenden gebrauchsfertigen Waffeltüten 3 zu vereinigen.

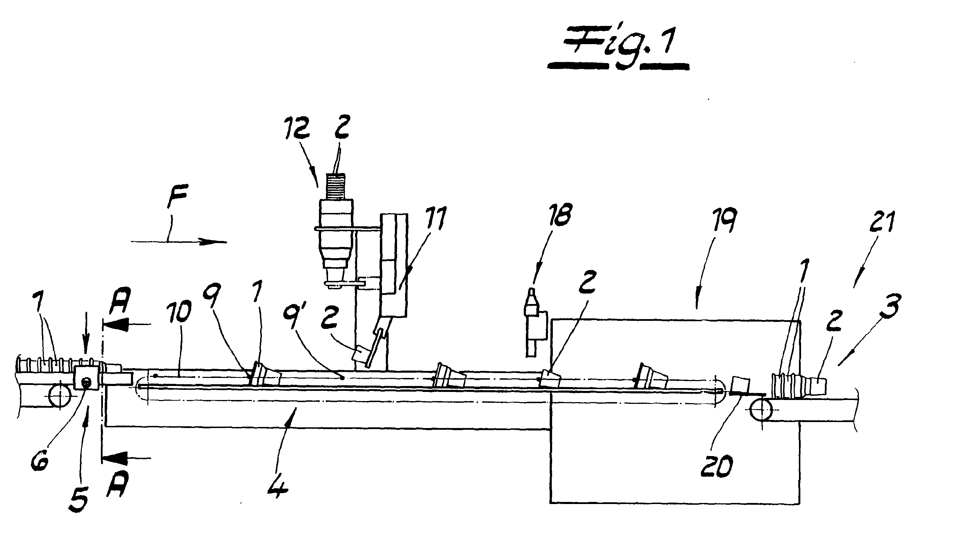

Zu diesem Zweck werden von links her in der Fig. 1 die konventionell hergestellten Waffelformteile 1 zugeführt, und zwar gestapelt. Um nun die einzelnen Waffelformteile 1 jeweils mit der Schutzhülle 2 ausrüsten zu können, ist es zunächst erforderlich, die Waffelformteile 1 zu entstapeln, damit sie einzeln einer Transportvorrichtung 4 zugeführt werden können, in welcher sie im Wesentlichen linear fortbewegt werden. Dieses Entstapeln wird in einer Entstapelungseinheit 5 vorgenommen, die nach dem Ausführungsbeispiel realisiert ist, aber nicht zwingend vorgesehen werden muss. Denn selbstverständlich ist es denkbar, dass die Waffelformteile 1 bereits einzeln der Transportvorrichtung 4 zugeführt werden.

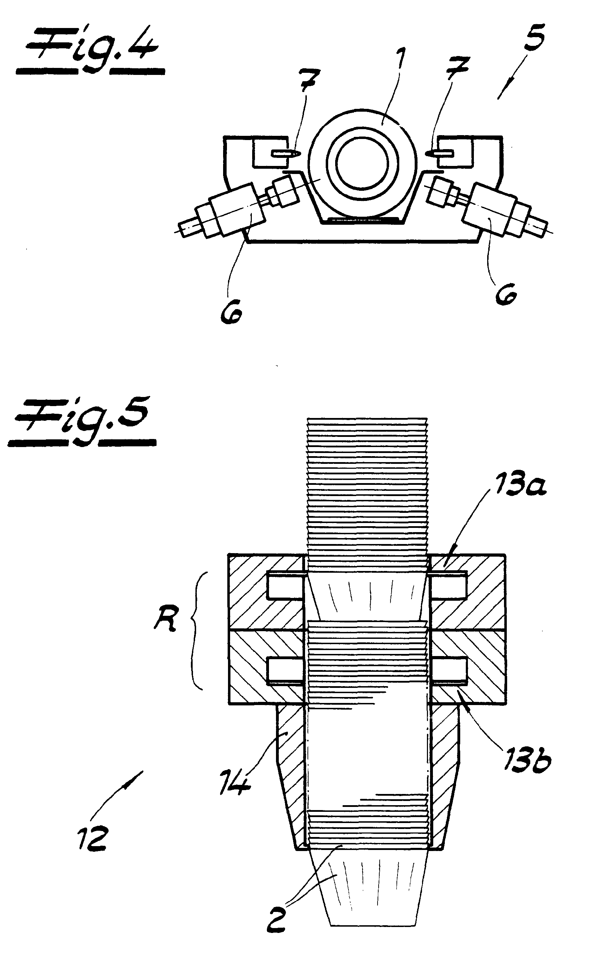

Die Entstapelungseinheit 5 ist ausweislich der Fig. 4 mit einer Klemmvorrichtung 6 ausgerüstet. Bei der Klemmvorrichtung 6 handelt es sich nach dem Ausführungsbeispiel um zwei Pneumatik-Zylinder 6 mit frontseitigen Stößeln, welche nach exakter Positionierung des Stapels an Waffelformteilen 1 das jeweils zweite Waffelformteil bzw. Hörnchen von vorne fixieren. Dies ist durch einen Pfeil in Fig. 1 angedeutet.

Auf diese Weise lässt sich das davor befindliche Waffelformteil 1 (das erste frontseitige Waffelformteil 1 des Stapels) von dem Stapel abblasen. Hierzu dienen zwei (Luft) Düsen 7, welche das vorderste Waffelformteil 1 mit einem in Richtung auf die Transportvorrichtung 4 gerichteten Luftstrahl nach vorne bewegen.

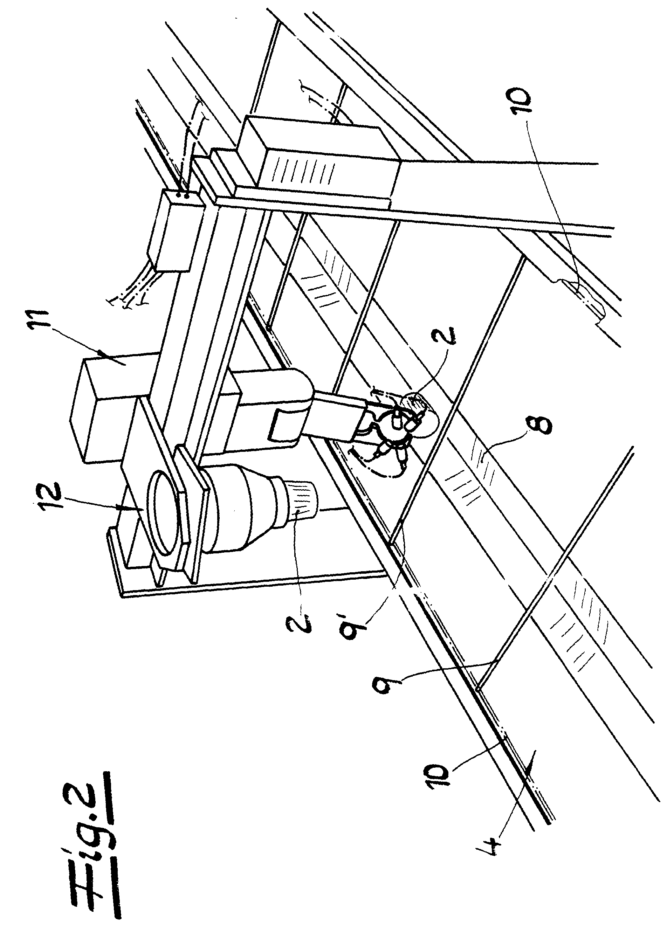

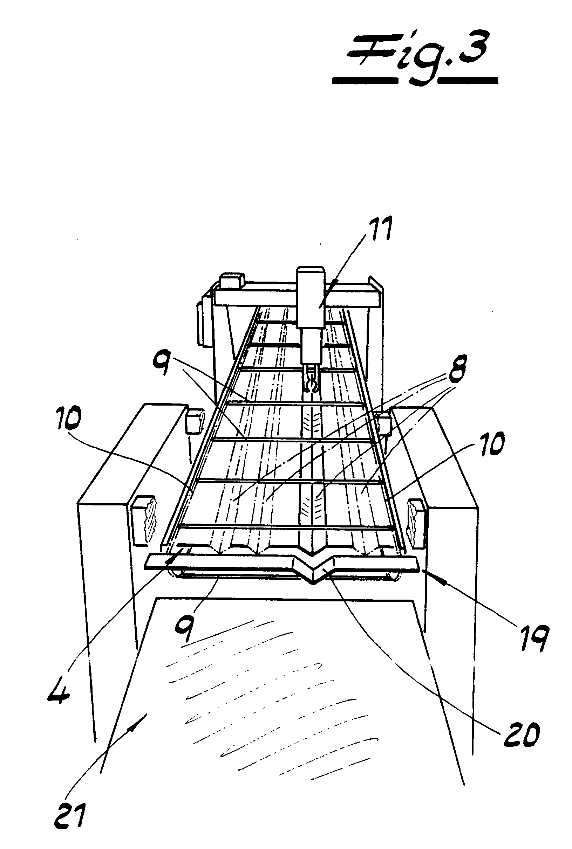

Nun befindet sich das zur Waffeltüte 3 auszurüstende Waffelformteil 1 auf der Transportvorrichtung 4, die im Wesentlichem linear arbeitet und eine oder mehrere, besonders in den Figuren 2 und 3 zu erkennende, Förderinnen 8 aufweist. Diese Förderrinnen 8 sind V-förmig gestaltet, so dass das konisch ausgeführte Waffelformteil 1 bzw. Hörnchen sicher hierin gehalten und geführt werden kann. Hierzu dienen Mitnehmer 9, die nach dem Ausführungsbeispiel als über den Förderrinnen 8 mit Horizontalabstand gleitende Stäbe ausgeführt sind und mit Hilfe beidseitiger Ketten 10 fortbewegt werden (vgl. Fig. 1 und 2). Diese Ketten 10 werden jeweils endseitig der Transportvorrichtung 4 über nicht ausdrücklich dargestellte Kettenräder geführt und hierdurch umlaufend angetrieben.

Es versteht sich, dass die Düsen 7 bzw. die Klemmvorrichtung 6 so angesteuert werden, dass das auf die Transportvorrichtung 4 zu übergebende Waffelformteil 1 genau zu dem Zeitpunkt abgeblasen wird, wenn es praktisch zwischen zwei Mitnehmern 9 auf der Förderrinne 8 zum Liegen kommt. Hierdurch ist gewährleistet, dass das jeweilige Waffelformteil 1 von einem der umlaufenden Mitnehmer 9 gleichsam ergriffen und schiebend in der zugehörigen Förderrinne 8 transportiert wird. Selbstverständlich ist auch ein ziehender Transport denkbar. Dann muss jedoch auf anders gestalteten Mitnehmer 9 zurückgegriffen werden.

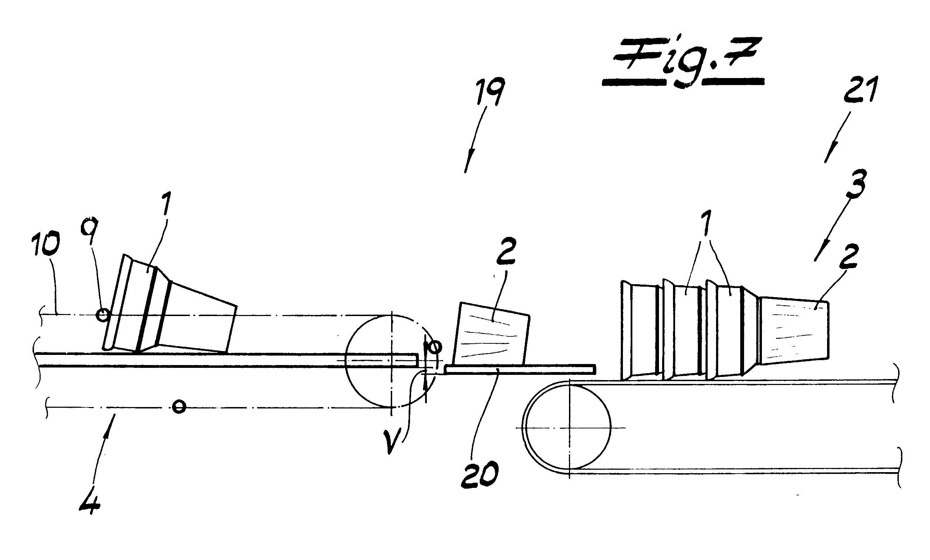

In Förderrichtung F vor dem betreffenden Waffelformteil 1 wird nun mit Hilfe einer Greif-/Schwenkeinheit 11, wie sie im Detail in den Fig. 6a und 6b dargestellt ist, eine zugehörige Schutzhülle 2 bzw. ein Papierring 2 in der Förderrinne 8 abgelegt. Der Weitertransport dieser Schutzhülle 2 erfolgt im Rahmen des Ausführungsbeispiels mit Hilfe des dem betreffenden Waffelformteil 1 vorauseilenden Mitnehmers 9'.

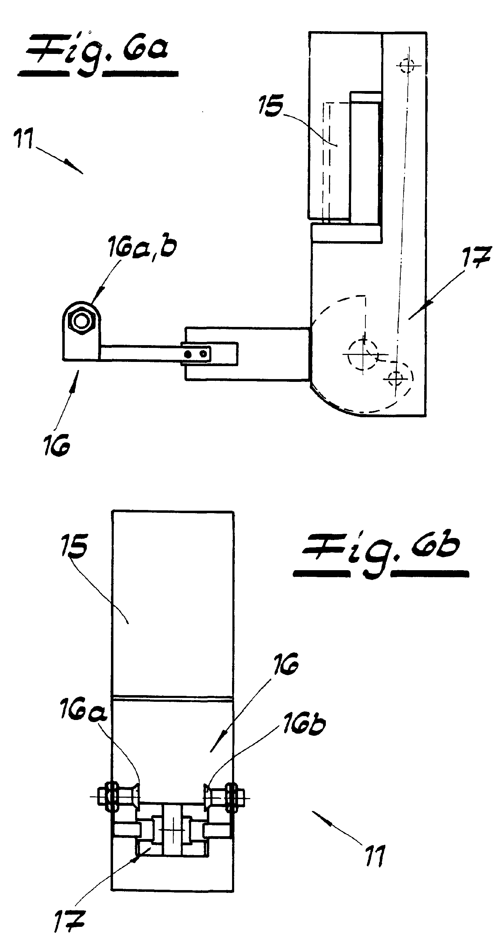

Die Funktionsweise der Greif-/Schwenkeinheit 11 ist wie folgt. Zunächst einmal werden die Schutzhüllen bzw. Papierringe 2 in einer insbesondere in Fig. 5 dargestellten Chargiervorrichtung 12 bevorratet. Diese Chargiervorrichtung 12 bildet zusammen mit der bereits erwähnten Greif-/Schwenkeinheit 11 eine Konfektionierstation bzw. Konfektioniereinheit 11, 12.

Die Chargiervorrichtung 12 weist zwei Klemmeinrichtungen 13a und 13b auf, die übereinander angeordnet sind und eine Regulierzone R zwischen sich definieren. Unterhalb der zu unterst angeordneten Klemmeinrichtung 13 b schließt sich ein konischer Dispenser 14 an. In der in Fig. 5 dargestellten Grundstellung ist die Klemmvorrichtung 13 b geöffnet, während die darüber befindliche Klemmvorrichtung 13a geschlossen ist. Folglich bildet sich ein Vorratsstapel an Schutzhüllen bzw. Papierringen 2 oberhalb der Klemmvorrichtung 13a.

Nachdem eine bestimmte Anzahl von Schutzhüllen 2 aus dem konischen Dispenser 14 mit Hilfe der Greif-/Schwenkeinheit 11 entnommen worden ist, wird die Klemmvorrichtung 13b geschlossen. Nach Entnahme einer weiteren, festgelegten Anzahl von Schutzhüllen 2 aus dem Dispenser 14 wird die Klemmvorrichtung 13a geöffnet, so dass der zuvor oberhalb befindliche Vorratsstapel an Schutzhüllen bzw. Papierringen 2 in die Regulierzone R gelangt und hier zu deren Auffüllen sorgt.

Sobald die Regulierzone R aufgefüllt ist, wird die Klemmvorrichtung 13a geschlossen und die Klemmvorrichtung 13b geöffnet, damit die im Regulierbereich R befindlichen Schutzhüllen 2 in den Dispenser 14 gelangen können, von wo aus sie unverändert mit Hilfe der Greif-/Schwenkeinheit 11 der Förderrinne 8 der Transportvorrichtung 4 zugeführt werden. Die in Fig. 5 gezeigte Grundstellung ist also wieder erreicht.

Insgesamt wird hierdurch gewährleistet, dass endseitig des Dispensers 14 immer genau eine Schutzhülle 2 in definierter Lage zur Verfügung steht, die problemlos von der Greif-/Schwenkeinheit 11 ergriffen werden kann. Unzulänglichkeiten, die durch einen zu hohen Vorratsstapel und damit gegebenenfalls einhergehende Quetschungen der Schutzhülle bzw. Papierringe 2 entstehen können, werden hierdurch schon vom Ansatz her vermieden. Auch kopf- und/oder fußseitig der Papierringe 2 vorgesehene und durch Bördelung hergestellte Versteifungsringe werden nicht beschädigt. Folglich lässt sich eine einwandfreie Formstabilität der Papierringe 2 selbst bei einer Papierdicke von 0,1-0,15 mm einstellen und beibehalten. Auch führt die beschriebene Vorgehensweise zu einer deutlichen Lärmreduzierung.

Die Greif-/Schwenkeinheit 11 wird im Detail in den Figuren 6a und 6b gezeigt. Dabei stellt die Fig. 6a eine Frontansicht dar, während in der Fig. 6b eine Seitenansicht zu erkennen ist. Nach dem Ausführungsbeispiel setzt sich die Greif-/Schwenkeinheit 11 aus insgesamt drei Bestandteilen zusammen. So findet sich eine Lineareinheit 15, welche Vertikalbewegungen einer Greifereinheit 16 vollführt. Derartige Vertikalbewegungen sind beim Abziehen der jeweiligen Schutzhülle bzw. des Papierringes 2 aus dem Dispenser 14 erforderlich.

Die Greifereinheit 16 weist zwei beidseitige Sauger 16a, 16b auf, welche den jeweiligen Papierring 2 diametral gegenüberliegend saugend ergreifen und aus dem Dispenser 14 in Verbindung mit der Lineareinheit 15 herausziehen. Eine Schwenkeinheit 17 dient schließlich dazu, den Papierring 2 in eine mehr oder minder horizontale Position zu überführen und in der Förderrinne 8 der Transportvorrichtung 4 abzulegen. Diese Verfahrensschritte werden natürlich so gesteuert, dass die Ablage des Papierringes 2 in der Förderrinne 8 üblicherweise zwischen zwei Mitnehmern 9,9' erfolgt, so dass der dem betreffenden Waffelformteil 1 vorgeschaltete Mitnehmer 9' eben diesen Papierring 2 schiebend in der Förderrinne 8 weitertransportieren kann.

Im Anschluss an die Konfektioniereinheit 11, 12 für die Zufuhr und Ablage der Schutzhüllen bzw. Papierringe 2 auf der Transportvorrichtung 4 findet sich eine Klebestation 18, welche nach dem Ausführungsbeispiel einen Zuckergusstropfen außenseitig auf das jeweilige Waffelformteil 1 aufbringt. Hierdurch ist gewährleistet, dass der anschließend mit dem Waffelformteil 1 zu verbindende Papierring 2 nicht nur durch Reibungskräfte, sondern zusätzlich auch adhäsiv haftet.

Die Vereinigung zwischen Waffelformteil 1 und Papierring 2 erfolgt nun in einer sich an die Klebestation 18 anschließenden Fügestation 19. Diese Fügestation 19 lässt sich besonders gut in den Fig. 3 und 7 erkennen. Tatsächlich weist die Fügestation 19 eine von der jeweiligen Förderrinne 8 der Transportvorrichtung 4 unabhängige endseitige Ablage 20 auf. Bei dieser Ablage 20 handelt es sich um ein V-förmig gebogenes Ablageblech, welches in Anpassung an das zu verarbeitende Waffelformteil 1 horizontal und gegebenenfalls vertikal justierbar ist.

Auf dieser endseitig der Transportvorrichtung 4 vorgesehenen Ablage 20 wird die Schutzhülle bzw. der Papierring 2 ruhend positioniert. Dies geschieht gleichsam automatisch, weil ausweislich der Figur 1 die Mitnehmer 9,9' in diesem Bereich über Kettenräder nach unten weggeschwenkt werden und mit Hilfe der Ketten 10 unterhalb der Transportvorrichtung 4 wieder in ihre Anfangsposition verbracht werden. Mit anderen Worten wird die jeweilige Schutzhülle 2 auf der Ablage 20 positioniert und bewegt sich nicht mehr weiter. Selbstverständlich kann hier durch entsprechende Anschläge oder dergleichen auch für ein Festhalten des betreffenden Papierringes 2 gesorgt werden.

Gegenüber der statischen Schutzhülle 2 wird das nacheilende Waffelformteil 1 unverändert schiebend durch die Förderrinne 8 fortbewegt, so dass es letztlich in die auf der Ablage 20 befindliche Schutzhülle 2 gleitet bzw. eingeschoben wird.

Dies wird ausweislich der Fig. 7 so bewerkstelligt, dass die Ablage 20 und die Förderrinne 8 einen Vertikalabstand V aufweisen, welcher dafür sorgt, dass das Waffelformteil bzw. Hörnchen 1 mit seinem Bodenteil in den konischen Papierring 2 gleiten kann, welcher kopfseitig auf jeden Fall einen größeren Durchmesser aufweist als das Waffelformteil 1 im Bodenbereich.

Jedenfalls fädelt sich das Waffelformteil 1 hierdurch praktisch in den Papierring 2 und wird für einen anschließenden innigen Verbund zwischen Schutzhülle 2 und Waffelformteil 1 noch weiter eingeschoben, und zwar durch den Mitnehmer 9. Nun liegt eine gebrauchsfertige Waffeltüte 3 vor. Diese Waffeltüten 3 lassen sich in einer anschließenden Stapelstation 21 zu einem Waffeltütenstapel zusammenfassen, welcher dann beispielsweise in Packkisten transportiert wird.

## Patentansprüche

1. Verfahren zur Herstellung gebrauchsfertiger Waffeltüten (3) aus Waffelformteilen (1) mit folgenden Verfahrensschritten:
**1.1)** das jeweilige Waffelformteil (1) wird einzeln einer Transportvorrichtung (4) zugeführt und im Wesentlichen linear fortbewegt;
**1.2)** im Zuge dieser Bewegung wird das Waffelformteil (1) mit einer in Richtung der Fortbewegung davor befindlichen Schutzhülle (2) zu der gebrauchsfertigen Waffeltüte (3) vereinigt.

2. Verfahren nach Anspruch 1, **dadurch gekennzeichnet**, dass mehrere Waffelformteile (1) der Transportvorrichtung (4) gestapelt zugeführt und eingangsseitig entstapelt und vereinzelt werden.

3. Verfahren nach Anspruch 1 oder 2, dadurch gekennzeichnet, dass die Waffelformteile (1) mittels Mitnehmern (9) in Förderrinnen (8) schiebend oder ziehend transportiert werden.

4. Verfahren nach einem der Ansprüche 1 bis 3, dadurch gekennzeichnet, dass die jeweilige Schutzhülle (2) mit Hilfe einer Greif-/Schwenkeinheit (11) vor dem zugehörigen Waffelformteil (1) in der Förderrinne (8) abgelegt und von einem eigenen Mitnehmer (9) transportiert wird.

5. Verfahren nach einem der Ansprüche 1 bis 4, dadurch gekennzeichnet, dass das Waffelformteil (1) vor seiner Vereinigung mit der Schutzhülle (2) adhäsiv beschichtet wird.

6. Verfahren nach einem der Ansprüche 1 bis 5, dadurch gekennzeichnet, dass die sich fortbewegende Schutzhülle (2) zur Vereinigung mit dem Waffelformteil (1) angehalten wird, so dass das unverändert weiter transportierte Waffelformteil (1) in die Schutzhülle (2) eingeschoben wird und als gebrauchsfertige Waffeltüte (3) die Transportvorrichtung (4) verlässt.

7. Anlage zur Herstellung gebrauchsfertiger Waffeltüten (3) aus Waffelformteilen (1), insbesondere zur Durchführung des Verfahrens nach einem der Ansprüche 1 bis 6, mit
**7.1)** einer im Wesentlichem linear arbeitenden Transportvorrichtung (4) mit gegebenenfalls vorgeschalteter Entstapelungseinheit (5),
**7.2)** zugehörigen Mitnehmern (9,9') für den Transport der Waffelformteile (1) und von Schutzhüllen(2),
**7.3)** wenigstens einer Greif-/Schwenkeinheit (11) für die Zufuhr und Ablage der Schutzhüllen (2) auf der Transportvorrichtung (4),
**7.4)** gegebenenfalls einer Klebestation (18), und mit
**7.5)** einer Fügestation (19) zur Vereinigung des jeweiligen Waffelformteils (1) mit der zugehörigen Schutzhülle (2).

8. Anlage nach Anspruch 7, dadurch gekennzeichnet, dass die Transportvorrichtung (4) eine Förderrinne (8) mit darüber in Längsrichtung geführten Mitnehmern (9,9') aufweist.

9. Anlage nach Anspruch 7 oder 8, dadurch gekennzeichnet, dass die Greif-/Schwenkeinheit (11) zusätzlich eine Chargiervorrichtung (12) für die Schutzhüllen (2) besitzt.

10. Anlage nach Anspruch 9, dadurch gekennzeichnet, dass die Scharschiervorrichtung (12) zwei Klemmeinrichtungen 13a, 13b mit dazwischen befindlicher Regulierzone (R) aufweist.

11. Anlage nach einem der Ansprüche 7 bis 10, dadurch gekennzeichnet, dass die Fügestation (19) eine von der Förderrinne (8) der Transportvorrichtung (4) unabhängige endseitige Ablage (20) zur ruhenden Positionierung der jeweiligen Schutzhülle (2) aufweist, wobei das zugehörige Waffelformteil (1) von der Förderrinne (8) aus in die auf der anschließenden Ablage (20) befindliche Schutzhülle (2) gleitet.
